# EUROPÄISCHE PATENTANMELDUNG

(11) **EP 1 609 750 A1**
(43) Veröffentlichungstag der Anmeldung: **28.12.2005**
(21) Anmeldenummer: 05013085.5
(22) Anmeldetag: 17.06.2005
(51) Int. Cl.: B65H 27/00, B65G 39/06, B65G 39/07, F16C 13/00

(54) **Transportwalze für Rollenförderer**

(30) Priorität: 22.06.2004 DE 202004009770 U
(71) Anmelder: Kohut, Franz-Josef, 91550 Dinkelsbühl (DE)
(72) Erfinder: Kohut, Franz-Josef, 91550 Dinkelsbühl (DE)
(74) Vertreter: Blaumeier, Jörg

(57) **Zusammenfassung**

Transportwalze, insbesondere für Rollenförderer, mit einem Trägerrohr (4) und einem das Fördergut schonenden Überzug oder Besatz, wobei auf das Trägerrohr ein Webplüsch in Form von Streifen (5) spiralig aufgewickelt und mit dessen Oberfläche verbunden ist.

## Beschreibung

Die Erfindung bezieht sich auf eine Transportwalze, insbesondere für Rollenförderer, mit einem Trägerrohr und einem das Fördergut schonenden Überzug oder Besatz.

Für die Glasindustrie und auch die Holzindustrie bei der Verarbeitung und der Transport von Produkten mit empfindlichen Oberflächen oder auch bei hochempfindlichen Verpackungen sind bereits Transportwalzen mit PU-Beschichtung oder mit einem Borstenbesatz bekannt geworden, wobei diese bekannten Tragrollen aber sehr teuer und aufwändig in der Produktion sind und nur bedingt lösungsmittelbeständig sind.

Der Erfindung liegt daher die Aufgabe zugrunde eine Transportwalze so auszugestalten, dass sie einerseits einen schonenden Transport der jeweiligen Güter ermöglicht, andererseits aber sehr einfach herstellbar und im Betrieb sehr robust ist.

Zur Lösung dieser Aufgabe ist erfindungsgemäß vorgesehen, dass auf das Trägerohr ein Webplüsch in Form von Streifen spiralig aufgewickelt und mit der Oberfläche des Trägerrohrs verbunden ist, wobei bevorzugt die Transportwalze ein Ablängteil eines langgestreckten, vorzugsweise endlosen Trägerrohrs sein soll, das vor dem Ablängen bewickelt worden ist.

Durch die erfindungsgemäße Ausbildung ergibt sich der Vorteil, dass nicht einzelne kurze Walzen mit den aufgewickelten Webplüschstreifen versehen werden müssen, sondern dass auf ein sehr langes Rohr, beim bevorzugten Kunststoffträgerrohr nahezu ein Endlosrohr, ein Webplüschstreifen spiralig endlos aufgewickelt wird, wobei sich entsprechend schräg zur Umlaufrichtung verlaufende Kanten ergeben, die beim Transport auch besonders wenig stören.

Bei Ausbildung des Trägerrohrs aus einem thermoplastischen Kunststoff ― ersatzweise kann natürlich auch das Trägerband des Webplüsches aus entsprechendem Material gebildet sein ― lässt sich erreichen, dass der Webplüschstreifen mit dem spiraligen Aufwickeln gleichzeitig ― durch entsprechende thermische Erwärmung ― auf die Oberfläche des Trägerrohrs aufgeschweißt wird, so dass eine gesonderte Verklebung nicht mehr erforderlich ist.

Durch geeignete Auswahl des Webverfahrens und der Materialien für den Webplüsch, dessen Flor bevorzugt aus Polyamid und dessen Trägerband beispielsweise aus Polyester bestehen kann, lassen sich die Eigenschaften des Webplüsches den jeweiligen Anforderungen der Transportstrecke optimal anpassen.

Ein besonders günstiger Aufbau ergibt sich in Ausgestaltung der Erfindung dadurch, dass das Ablängteil des Trägerrohrs auf eine vorgefertigte Baueinheit aus zwei Endkappen und einer beidends überstehenden Stahlwelle, oder aber auch auf eine Metall-Tragrolle, vorzugsweise mit Klemmsitz, aufgeschoben ist.

Neben der Eignung der erfindungsgemäßen Transportwalze für Rollenförderer lässt sich die Transportwalze auch als Umlenkrolle z. B. in der Druckindustrie, der Folienverarbeitung, der Verarbeitung von Vliesstoffen usw. einsetzen, wo eine gewisse Polsterung, Abreinigung oder ein schonungsvolles Transportieren erreicht werden sollen.

Dabei liegt es schließlich auch noch im Rahmen der Erfindung, dass in die Streifen vorzugsweise zwei nebeneinander liegende verschiedenfarbige Codierlängsstreifen eingebracht sind, insbesondere eingewebt sind, die ein "falsches" Einlegen einer solchen Transportwalze in eine Rollenfördererstrecke verhindern, speziell wenn der Plüschbesatz eine Neigung und damit eine Vorzugsrichtung besitzt, in der er beim Transport abrollen soll. Je nach den Borsten und der Wicklungsrichtung ändert sich nämlich das Mitnahmedrehmoment auf das Transportgut und damit auch die etwaigen Auskämmeigenschaften wenn man die Transportwalzen neben ihrer Transportfunktion auch noch zum oberflächigen Abreinigen des Transportgutes mit einsetzen will.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: einen Ausschnitt einer der Transportwalzen des Rollenförderers mit einem erfindungsgemäßen aufgewickelten Plüschbesatz,
- Fig. 2: eine Ansicht des Endes einer Transportwalze,
- Fig. 3: einen Schnitt durch das Ende der Transportwalze, und
- Fig. 4: eine Ansicht einer abgewandelten Transportwalze mit in die Plüschstreifen eingewebten Codierstreifen.

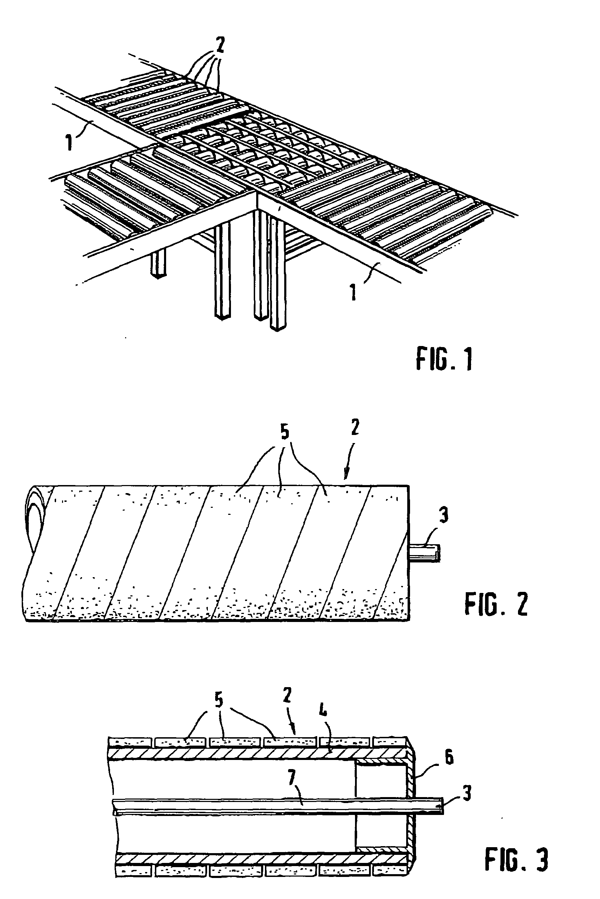

Der in Fig. 1 andeutungsweise dargestellte Rollenförderer besteht in seinen Längsförderabschnitten ― der Weichenabschnitt im Bereich der Abzweigung interessiert in diesem Zusammenhang nicht ― aus in einem Rahmen 1 eng nebeneinander liegend drehgelagerten Transportwalzen 2 mit beidends herausstehenden Achsstummeln 3, die vorzugsweise über Kugellager im Rahmen 1 gelagert sein können. Selbstverständlich ist es auch möglich die Achsen fest im Gestell zu lagern und das Kugellager in die Transportwalze zu integrieren. Dies ist aber im Stand der Technik bekannt und braucht daher an dieser Stelle nicht mehr beschrieben zu werden.

Erfindungsgemäß ist auf die Oberfläche des Trägerrohrs ein Webplüschbesatz aufgebracht und zwar in Form von Streifen 5, die spiralig aneinander anstoßend auf das Trägerrohr 4 aufgewickelt sind, wobei die Streifen mit der Oberfläche des Trägerrohrs 4 verbunden sind. Dies kann durch eine Verklebung erfolgen oder aber durch eine Verschweißung indem der thermoplastische Träger des Webplüsches oder aber das aus thermoplastischem Kunststoff bestehende Trägerrohr 4 durch eine während des Wickelns erfolgende Aufheizung erweicht wird, so dass eine Verschweißung stattfinden kann und somit eine gesonderte Verklebung gespart wird. Die Endkappen 6 des Trägerrohrs 4 bilden die Rohrführung für die Welle 7. Das bewickelte Trägerrohr für eine Tragwalze 2 ist bevorzugt ein Ablängteil eines sehr langen, also viele Meter langen Kunststoffträgerrohrs. Anstelle der Verwendung der Endkappen für die Lagerung der Welle 7 könnte auch vorgesehen sein, dass das bewickelte Kunststoffträgerrohr auf eine Metall-Transportwalze vorzugsweise mit Klemmsitz aufgeschoben ist.

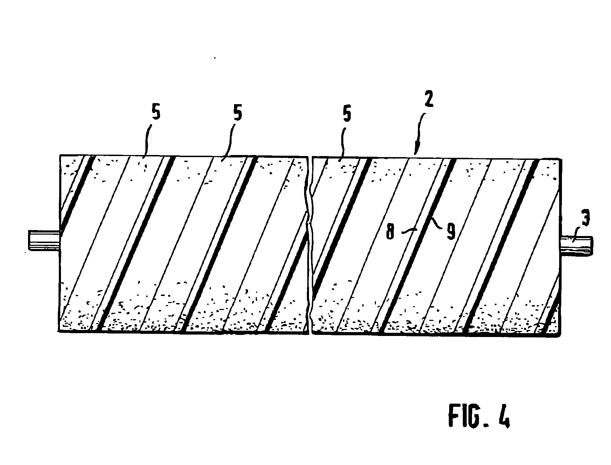

Die Fig. 4 zeigt eine Ansicht einer erfindungsgemäßen Transportwalze mit Webplüschstreifen 5 in die zwei nebeneinander liegende verschiedenfarbige eingewebte Codierstreifen 8 und 9 eingebracht sind. Beispielsweise kann bei einer entsprechend andersfarbigen Grundfarbe des Streifens 5 der Codierstreifen 8 gelb und der Codierstreifen 9 schwarz sein. In der richtigen, in Fig. 4 gezeigten Einbauposition einer solchen Reinigungswalze ist diese Farbcodierung in der üblichen Weise von links nach rechts die Codierung gelb-schwarz. Bei umgedrehter Walze, also wenn die Borsten und die Wicklungsrichtung geändert sind, ergibt sich eine Farbcodierung schwarz-gelb, so dass solche Falschorientierungen beim Einbau der erfindungsgemäßen Transportwalzen einfach vermieden werden können. Dadurch lässt sich auch das Problem ausschalten, dass je nach Borsten- und Wicklungsrichtung ein unterschiedliches Mitnahmedrehmoment gegeben ist.

## Patentansprüche

1. Transportwalze, insbesondere für Rollenförderer, mit einem Trägerrohr und einem das Fördergut schonenden Überzug oder Besatz, **dadurch gekennzeichnet, dass** auf das Trägerrohr (4) ein Webplüsch in Form von Streifen (5) spiralig aufgewickelt und mit dessen Oberfläche verbunden ist.

2. Transportwalze nach Anspruch 1, **dadurch gekennzeichnet, dass** sie ein Ablängteil eines langgestreckten, vorzugsweise endlosen Trägerrohrs ist, das vor dem Ablängen bewickelt worden ist.

3. Transportwalze nach Anspruch 1 oder 2, **dadurch gekennzeichnet, dass** die Streifen (5) auf die Oberfläche des aus vorzugsweise thermoplastischem Kunststoff bestehenden Trägerrohrs (4) aufgeschweißt sind.

4. Transportwalze nach einem der Ansprüche 1 bis 3, **dadurch gekennzeichnet, dass** der Webplüsch im Flor aus Polyamid besteht.

5. Transportwalze nach einem der Ansprüche 1 bis 4, **dadurch gekennzeichnet, dass** das Trägerband des Webplüsches aus Polyester besteht.

6. Transportwalze nach einem der Ansprüche 1 bis 5, **dadurch gekennzeichnet, dass** das Ablängteil des Trägerrohrs (4) auf eine vorgefertigte Baueinheit aus zwei Endkappen (6) und einer beidends überstehenden Stahlwelle (7) aufgeschoben ist.

7. Transportwalze nach einem der Ansprüche 1 bis 5, **dadurch gekennzeichnet, dass** ein Kunststoff-Trägerrohr mit aufgewickeltem Webplüschstreifen auf eine Metall-Transportwalze, vorzugsweise mit Klemmsitz aufgeschoben ist.
